# DEMANDE DE BREVET EUROPEEN

(11) **EP 1 672 942 A1**
(43) Date de publication de la demande: **21.06.2006**
(21) Numéro de dépôt: 04293069.3
(22) Date de dépôt: 20.12.2004
(51) Int. Cl.: H04Q 7/38

(54) **Transmission d'informations dans une zone géographique limitée**

(71) Demandeur: ALCATEL, 75008 Paris (FR)
(72) Inventeur: Ntsonde, Joel, 31830 Plaisance du Touch (FR); Vincent, Paul, 31830 Plaisance du Touch (FR)
(74) Mandataire: Hedarchet, Stéphane

(57) **Abrégé**

Un dispositif (D) est dédié à la gestion d'informations prioritaires dans un terminal de communication radio (UE1), d'un réseau de communication radio, comprenant un module de communication (MC) pouvant communiquer avec le réseau. Ce dispositif (D) comprend des moyens de traitement (MT) chargés, lorsque le module de communication hybride (MC) reçoit un message diffusé par le réseau dans une zone dite primaire (ZP) et contenant au moins la désignation d'au moins une zone secondaire (C1) incluse dans la zone primaire (ZP), de déterminer si le terminal (UE1) est situé dans cette zone secondaire désignée (C1), afin d'autoriser le terminal (UE1) à établir une communication prioritaire avec le réseau et/ou à afficher des informations prioritaires, éventuellement contenues dans le message reçu, si ce terminal se trouve situé dans la zone secondaire (C1).

## Description

L'invention concerne les réseaux de communication radio et plus précisément la gestion des communications dans des parties choisies de ces réseaux.

On entend ici par « réseau de communication radio» aussi bien un réseau mobile (ou cellulaire), par exemple de type GSM, GPRS/EDGE, UMTS ou CDMA 2000, comportant un réseau d'accès radio terrestre, définissant plusieurs cellules, qu'un réseau de communication hybride ou purement satellitaire.

On entend ici par « réseau de communication hybride » aussi bien un réseau de (télé)communication par satellites comportant une multiplicité de répéteurs terrestres, qu'un réseau mobile ou cellulaire comportant un réseau d'accès radio terrestre, définissant plusieurs cellules, et un réseau d'accès satellitaire, comprenant au moins un satellite de communication couvrant au moins une zone terrestre dite « primaire » incluant plusieurs cellules, et de préférence un grand nombre.

Par ailleurs, on entend ici par « réseau satellitaire » un réseau de (télé)communication comportant un réseau d'accès satellitaire comprenant au moins un satellite de communication couvrant au moins une zone terrestre primaire.

Le téléphone est un outil de communication particulièrement répandu et particulièrement bien adapté à la transmission d'informations en direct. Cela est encore plus particulièrement le cas des réseaux de téléphonie mobile (ou cellulaire) puisqu'ils permettent de joindre une personne équipée d'un terminal de communication mobile, y compris lorsqu'elle n'est pas à son domicile.

Mais, les communications téléphoniques ne sont possibles qu'à condition que le réseau d'accès radio du réseau de téléphonie soit en état de fonctionnement. Or, dans certaines situations, comme par exemple dans le cas d'une catastrophe naturelle importante, les infrastructures téléphoniques assurant les liaisons téléphoniques peuvent être endommagées, voire même détruites, si bien qu'il devient difficile, voire impossible, de contacter les personnes pour leur transmettre des informations prioritaires soit sous forme de messages d'alarme, soit verbalement.

Un réseau satellitaire ou un réseau hybride permet de pallier cet inconvénient, puisqu'il permet de joindre de nombreux terminaux de communication hybrides grâce à son (ou ses) satellite(s) de communication, quel que soit la situation au sol. Cependant, lorsqu'un satellite de communication est de type SDMB (« Satellite Digital Multimedia Broadcast » - diffusion multimédia numérique par satellite), il ne peut que diffuser des messages dans toute sa zone primaire de couverture, laquelle peut être très étendue, par exemple une région ou un pays entier. Par conséquent, il n'est pas possible de restreindre la diffusion de messages à une partie choisie d'une zone primaire de couverture.

Or cela pourrait s'avérer particulièrement utile, notamment en cas de catastrophe naturelle (locale) ou pour prévenir (localement) de l'imminence d'une catastrophe, puisque cela permettrait de ne prévenir de façon groupée que les personnes qui sont réellement concernées et donc d'éviter des mouvements de panique généralisés et/ou une saturation des liaisons téléphoniques.

Certes, il est possible dans certains réseaux cellulaires de configurer momentanément le réseau d'accès radio terrestre afin d'interdire les communications dans au moins une cellule, par exemple pour effectuer des opérations de maintenance (comme décrit notamment dans les spécifications techniques du 3GPP TS 22.011 et TS 25.331). Mais, cela ce fait au détriment des clients situés dans les cellules dans lesquelles les communications sont interdites. Par ailleurs, cela ne permet pas de réattribuer aux cellules qui en ont momentanément besoin des ressources radio attribuées aux cellules interdites.

Aucune solution connue n'apportant une entière satisfaction, l'invention a donc pour but d'améliorer la situation.

Elle propose à cet effet un dispositif de gestion d'informations prioritaires pour un terminal de communication radio, d'un réseau de communication radio, comprenant notamment un module de communication.

Ce dispositif de gestion se caractérise par le fait qu'il comprend des moyens de traitement chargés, lorsque le module de communication de leur terminal reçoit un message diffusé par le réseau dans une zone dite « primaire » et contenant au moins la désignation d'au moins une zone dite « secondaire » incluse dans la zone primaire, de déterminer si le terminal est situé dans cette (ces) zone(s) secondaire(s) désignée(s), afin d'autoriser le terminal à établir une communication prioritaire avec le réseau et/ou à afficher des informations prioritaires, éventuellement contenues dans le message reçu, si ce terminal se trouve situé dans la (ou l'une des) zone(s) secondaire(s).

Le dispositif selon l'invention peut comporter d'autres caractéristiques qui peuvent être prises séparément ou en combinaison, et notamment :
- certains au moins des messages diffusés peuvent être des messages d'alarme contenant au moins une désignation de zone secondaire et les informations prioritaires à afficher ;
- certains au moins des messages diffusés peuvent comporter au moins une désignation de zone secondaire et un message d'alarme contenant les informations prioritaires à afficher ;
- lorsque le réseau est de type hybride ou satellitaire (et donc qu'il comprend au moins un satellite de communication couvrant au moins la zone primaire incluant chaque zone secondaire désignée), certains au moins des messages diffusés par le satellite peuvent être des messages d'information système de type SIB (« System Information Block ») contenant au moins une désignation de zone secondaire ;
   > ces messages SIB sont par exemple dédiés et comportent un champ destiné à la désignation d'au moins une zone secondaire ;
- ses moyens de traitement peuvent être chargés, lorsqu'ils ont déterminé que leur terminal était situé dans une zone secondaire désignée, d'autoriser le module de communication hybride à établir une communication d'urgence avec le réseau au moyen de ressources dédiées (éventuellement satellitaires dans le cas d'un réseau de type hybride ou satellitaire) ;
- ses moyens de traitement peuvent être chargés, lorsqu'ils ont déterminé que leur terminal n'était pas situé dans une zone secondaire désignée, d'interdire le module de communication hybride d'établir une communication d'urgence avec le réseau au moyen de ressources dédiées (éventuellement satellitaires dans le cas d'un réseau de type hybride ou satellitaire) ;
- chaque désignation peut être représentative de positions géographiques définissant l'enveloppe de la zone secondaire désignée. Dans ce cas, les moyens de traitement sont chargés de déterminer si la position du terminal est comprise dans l'enveloppe correspondant à la zone secondaire désignée ;
- en variante, chaque désignation peut être représentative de l'identifiant de la zone secondaire désignée (ou les identifiants de la ou des cellules qui la constituent dans le cas d'un réseau hybride ou purement cellulaire). Dans ce cas, les moyens de traitement sont chargés de déterminer les positions géographiques qui définissent l'enveloppe qui est associée à l'identifiant de la zone secondaire désignée (ou aux identifiants de la ou des cellules qui la constituent), puis si la position de leur terminal est comprise dans cette enveloppe ;
- ses moyens de traitement peuvent être chargés de déterminer si le terminal est situé dans une zone secondaire désignée à partir de données représentatives de sa position géographique, fournies par des moyens de localisation (implantés dans le terminal ou dans un serveur de localisation du réseau).

L'invention propose également un terminal de communication, comprenant, d'une part, un module de communication propre à communiquer avec un réseau de communication radio, et d'autre part, un dispositif de gestion du type de celui présenté ci-avant.

Un tel terminal peut également comprendre des moyens de localisation chargés de délivrer des données représentatives de sa position géographique, comme par exemple un module de radionavigation (éventuellement de type GPS (pour « Global Positioning System »)) ou un module de triangulation intercellulaire (éventuellement de type TOA (pour « Time Of Arrival »)).

L'invention est particulièrement bien adaptée, bien que de façon non exclusive, aux réseaux satellitaires, aux réseaux de communication hybrides de type GSM, GPRS/EDGE, UMTS, et CDMA 2000, ainsi qu'aux réseaux mobiles (ou cellulaires) de type GSM, GPRS/EDGE, UMTS, et CDMA 2000.

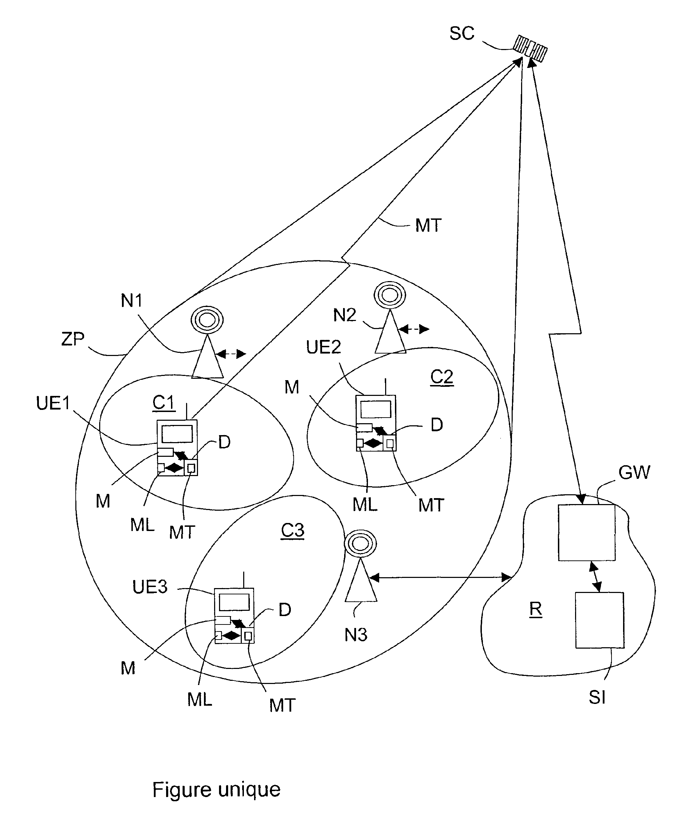

D'autres caractéristiques et avantages de l'invention apparaîtront à l'examen de la description détaillée ci-après, et du dessin annexé, sur lequel l'unique figure illustre de façon très schématique un réseau de communication hybride équipé d'un serveur d'informations prioritaires destinées à des terminaux de communication hybrides équipés d'un dispositif de gestion selon l'invention. Le dessin annexé pourra non seulement servir à compléter l'invention, mais aussi contribuer à sa définition, le cas échéant.

L'invention a pour objet de permettre la diffusion d'informations prioritaires à des terminaux de communication radio situés dans des portions d'un réseau de communication radio.

Dans ce qui suit, on considère à titre d'exemple non limitatif que le réseau de communication radio est un réseau hybride comprenant un réseau cellulaire de type UMTS comportant un réseau d'accès radio terrestre, définissant plusieurs cellules Ci, et un réseau d'accès satellitaire, comprenant un satellite de communication SC couvrant au moins une zone terrestre dite « primaire » ZP incluant plusieurs cellules Ci, et de préférence un grand nombre.

Il est important de noter que l'invention n'est pas limitée aux réseaux hybrides cellulaires de type UMTS. Elle concerne en effet tous les réseaux hybrides cellulaires (ou mobiles), et notamment ceux de type GSM, GPRS/EDGE et CDMA 2000. L'invention concerne également, d'une première part, les réseaux hybrides constitués d'un réseau de (télé)communication par satellite(s) et d'une multiplicité de répéteurs terrestres, d'une deuxième part, les réseaux de (télé)communication par satellite(s) (sans répéteur terrestre), et d'une troisième part, les réseaux mobiles (ou cellulaires) et notamment ceux de type GSM, GPRS/EDGE, UMTS et CDMA 2000.

Dans l'exemple illustré sur l'unique figure, le réseau d'accès radio (terrestre cellulaire) ne comprend que trois cellules Ci (i=1 à 3 - C1 à C3). Mais, l'indice i peut prendre n'importe quelle valeur supérieure à un (1).

Un réseau hybride de type UMTS peut, d'une façon très schématique mais néanmoins suffisante à la compréhension de l'invention, être résumé à un réseau de coeur (ou « Core Network ») couplé à un réseau d'accès radio (terrestre), appelé UTRAN, et à un réseau d'accès satellitaire.

Le réseau d'accès satellitaire comporte au moins un satellite de communication SC couplé par voie d'ondes à un équipement de type passerelle satellitaire (ou « gateway ») GW, chargé notamment de gérer les ressources satellitaires. Le satellite est par exemple de type SDMB (« Satellite Digital Multimedia Broadcast ») de manière à permettre la diffusion de données multimédia numériques destinées à l'ensemble des terminaux de communication UEk (ici, l'indice k est compris entre 1 et 3 (UE1 à UE3), mais il peut prendre n'importe quelle valeur supérieure ou égale à 2) situés dans sa zone de couverture ZP.

Le réseau d'accès radio (UTRAN) comporte un ensemble de stations de base Nj, appelées Node Bs, et de contrôleurs de réseau radio ou noeuds, appelés RNCs (pour « Radio Network Controlers »), raccordés entre eux, et un gestionnaire de réseau d'accès radio.

Chaque station de base (Node B) Nj (ici, l'indice j est compris entre 1 et 3 (N1 à N3), mais il peut prendre n'importe quelle valeur supérieure ou égale à 2) est associée à au moins une cellule Ci couvrant une zone radio dans laquelle des terminaux de communication mobiles UEk peuvent établir (ou poursuivre) des liaisons radio.

Dans ce qui suit on considère, à titre d'exemple non limitatif, que les terminaux de communication mobiles UEk sont des téléphones mobiles équipés d'un module de communication hybride MC. Mais, l'invention n'est pas limitée à ce type de terminal de communication hybride. Elle concerne en effet tous les équipements de communication comportant un module de communication hybride MC capable d'échanger des signaux par voie d'ondes, d'une part, avec les stations de base Nj (ou les répéteurs) qui contrôlent les communications au sein des cellules Ci du réseau mobile (ou du réseau satellitaire), et d'autre part, avec le(s) satellite(s) de communication SC, et notamment les ordinateurs portables et les assistants personnels numériques (ou PDAs) équipés de moyens de communication hybrides permettant d'établir des liaisons téléphoniques radio et satellitaires.

Le réseau de coeur comprend un ensemble d'équipements de réseau, raccordé aux contrôleurs de réseau radio (RNCs) et au gateway GW, ainsi qu'à un gestionnaire de réseau de coeur.

Dans l'exemple illustré, le réseau de coeur, le réseau d'accès satellitaire, hormis la gateway GW et le satellite de communication SC, et le réseau d'accès radio (UTRAN), hormis ses stations de base Nj (Node B), sont confondus et matérialisés par le patatoïde référencé R.

L'invention propose d'équiper les terminaux de communication UEk (ici des téléphones mobiles hybrides) d'un dispositif D dédié à la gestion d'informations prioritaires, et de faire diffuser par le réseau dans une zone primaire, englobant au moins une zone dite « secondaire », des messages spécifiques contenant des données d'informations prioritaires, parmi lesquelles au moins la désignation d'au moins une zone secondaire.

Il est important de noter que, dans le cas d'un réseau hybride, une zone secondaire peut être identique, comme illustré, à une cellule donnée Ci. Mais cela n'est pas obligatoire. Elle peut en effet englober plusieurs cellules, au moins partiellement, ou bien ne constituer qu'une partie d'une grande cellule. Par ailleurs, dans le cas d'un réseau purement satellitaire comprenant au moins un satellite de communication, une zone secondaire est une zone (ou étendue géographique) constituant une sous-partie de la zone primaire de couverture du satellite de communication. En outre, dans le cas d'un réseau cellulaire (ou mobile), une zone primaire contient au moins une zone secondaire qui peut être identique à une cellule donnée ou peut englober plusieurs cellules, au moins partiellement, ou bien peut ne constituer qu'une partie d'une grande cellule.

Dans l'application de l'invention à un réseau hybride, les messages spécifiques sont diffusés par le satellite (de communication) SC dans toute sa zone de couverture (ou zone primaire) ZP, laquelle englobe au moins une zone secondaire du réseau d'accès radio (UTRAN).

Les données d'informations prioritaires contenues dans les messages spécifiques diffusés sont par exemple définies par l'opérateur au niveau d'un serveur d'informations SI implanté, par exemple, dans le réseau d'accès satellitaire et couplé au gateway GW. Le gateway GW est chargé de constituer les messages spécifiques à diffuser en intégrant dedans les données d'informations reçues du serveur d'informations SI et de les transmettre par voie d'ondes au satellite SC afin qu'il les diffuse dans sa zone de couverture ZP.

On reviendra plus loin sur les types de message spécifique qui sont diffusés, selon l'invention.

Le dispositif de gestion D comprend au moins un module de traitement MT chargé, lorsque le module de communication hybride MC de son téléphone UEk reçoit un message spécifique provenant du satellite SC (et contenant au moins la désignation d'au moins une zone secondaire Ci), de déterminer si ce téléphone UEk est situé dans cette (ces) zone(s) secondaire(s) désignée(s). Puis, si le téléphone UEk se trouve situé dans la (ou l'une des) zone(s) secondaire(s) désignée(s), le module de traitement MT l'autorise à établir une communication prioritaire avec le réseau au moyen de son module de communication (ici hybride) MC et/ou à afficher sur son écran des informations prioritaires, éventuellement contenues dans le message spécifique reçu.

La méthode utilisée par le module de traitement MT pour obtenir la position du téléphone UEk, dans lequel il est implanté, dépend notamment du type du message spécifique reçu, ici, du satellite SC.

Tout type de message diffusé, et plus généralement tout type de contenu (ou flux) à diffuser, et notamment les contenus multimédia (audio et/ou vidéo), peut être envisagé.

Au moins trois types de messages spécifiques diffusés peuvent être envisagés.

Un premier type de messages spécifiques concerne les messages d'alerte diffusés (ou « alert message broadcast »). Il peut par exemple s'agir de messages de type « MBMS Service Information », décrits dans la spécification technique TS 35.346 « Introduction of Multimedia Broadcast/Multicast Service (MBMS) in the Radio Access Network (RAN); Stage 2 », que l'on complète par un élément de localisation.

L'invention propose d'intégrer dans ces messages d'alarme, en complément de leurs données habituelles et afin qu'ils constituent des messages spécifiques à diffuser, au moins une désignation de zone secondaire Ci et des données d'informations prioritaires destinées à être affichées sur les écrans des téléphones UEk situés dans chaque zone secondaire Ci désignée.

Tout type d'information prioritaire peut être envisagé, comme par exemple un compte rendu de catastrophe naturelle, ou l'indication de l'imminence d'une catastrophe naturelle, ou un numéro d'urgence à appeler pour obtenir des informations précises, ou encore des conseils et/ou des mesures à prendre compte tenu de la situation en cours ou à venir.

Chaque désignation de zone secondaire Ci et les données d'informations prioritaires associées sont communiquées au gateway GW par le serveur d'informations SI, afin qu'il constitue un message d'alarme les incorporant, puis qu'il le transmette au satellite SC en vue de sa diffusion dans sa zone de couverture ZP.

Un deuxième type de message spécifique concerne une variante des messages d'alerte présentés ci-avant.

L'invention propose de constituer un message spécifique à diffuser en associant à un message d'alarme classique au moins une désignation de zone secondaire Ci et des données d'informations prioritaires destinées à être affichées sur les écrans des téléphones UEk situés dans chaque zone secondaire Ci désignée.

De nouveau, tout type d'information prioritaire peut être envisagé.

Chaque désignation de zone secondaire Ci et les données d'informations prioritaires associées sont également communiquées au gateway GW par le serveur d'informations SI, afin qu'il les associe à un message d'alarme classique pour constituer un message spécifique, puis qu'il transmette ce dernier au satellite SC en vue de sa diffusion dans sa zone de couverture ZP.

Dans les premier et deuxième types, lorsque le module de communication hybride MC d'un téléphone UEk reçoit un message spécifique, il le transmet au dispositif de gestion D afin que son module de traitement MT analyse une partie au moins de son contenu.

Plus précisément, le module de traitement MT commence par analyser les données qui désignent chaque zone secondaire Ci. Deux cas peuvent alors être envisagés.

Dans un premier cas, les données qui désignent une zone secondaire Ci sont représentatives de cette zone secondaire ou d'un ou plusieurs identifiants de cellules Ci du réseau hybride. Dans ce cas, le module de traitement MT doit déterminer des positions géographiques définissant globalement la zone de couverture (secondaire) désignée par le ou les identifiants contenus dans le message spécifique, ou mieux encore les frontières délimitant cette zone secondaire. Pour ce faire, le module de traitement MT peut par exemple interroger des moyens de stockage qui sont de préférence implantés dans son téléphone UEk ou bien dans son dispositif de gestion D. Tout type de moyens de stockage peut être envisagé, et notamment une mémoire classique, une base de données, ou un répertoire. Les données de positions géographiques peuvent être stockées dans une table en correspondance d'identifiants de zone secondaire ou de cellule.

Dans un second cas, les données qui désignent une zone secondaire Ci sont directement représentatives des positions géographiques qui définissent globalement sa zone de couverture (secondaire), ou mieux encore de ses frontières.

Une fois que le module de traitement MT est en possession des données de positions géographiques de chaque zone secondaire désignée dans le message spécifique reçu, il détermine la position géographique du téléphone UEk dans lequel il est implanté.

De nouveau, deux cas peuvent être envisagés.

Dans un premier cas (illustré sur l'unique figure), le téléphone UEk est équipé d'un module de localisation ML délivrant des données de position. Dans ce cas, le module de traitement MT interroge le module de localisation ML afin d'obtenir les données de position du téléphone UEk dans lequel il est implanté.

Tout type de module de localisation ML peut être envisagé, et notamment un module de radionavigation de type GNSS (ou RNSS), comme par exemple un système GPS (pour « Global Positioning System ») ou GLONASS ou encore GALILEO, ou un module de triangulation intercellulaire de type TOA (« Time Of Arrival » - temps d'arrivée).

Il est rappelé que la technique TOA consiste à faire transmettre simultanément par les stations de base qui entourent un terminal mobile des signaux à analyser comportant un marquage temporel représentatif de leur instant d'émission, et, à réception par le terminal mobile des signaux à analyser provenant d'au moins deux stations de base et comportant un marquage temporel représentatif d'un même instant d'émission, à déterminer par triangulation la position du terminal mobile à partir dudit instant d'émission et des instants de réception des signaux à analyser.

Dans un second cas, le téléphone UEk n'est pas équipé d'un module de localisation ML. Dans ce cas, le module de traitement MT doit demander à son téléphone UEk d'interroger le réseau hybride afin d'obtenir les données définissant sa position. A cet effet, le réseau hybride doit comporter un serveur de localisation chargé de déterminer les positions géographiques des téléphones UEk.

Tout type de technique de localisation peut être envisagé, et notamment la technique dite EOTD (« Enhanced Observed - Time Difference » - différence de temps observée améliorée).

En demandant l'interrogation à distance du serveur de localisation, le module de traitement MT peut récupérer les données définissant la position géographique du téléphone UEk dans lequel il est implanté.

Une fois que le module de traitement MT est en possession des données de positions géographiques de chaque zone secondaire désignée dans le message spécifique reçu et des données de position géographique du téléphone UEk dans lequel il est implanté, il les compare entre elles afin de déterminer si ledit téléphone UEk est situé ou non dans une zone secondaire désignée.

Si le téléphone UEk est situé dans une zone secondaire désignée, le module de traitement MT l'autorise à afficher sur son écran les informations prioritaires contenues dans le message spécifique reçu, ainsi qu'éventuellement à demander l'établissement d'une communication d'urgence (ou prioritaire), comme on le verra plus loin.

Dans le cas contraire, le module de traitement MT interdit l'affichage des informations prioritaires contenues dans le message spécifique reçu ainsi que l'établissement d'une communication d'urgence (ou prioritaire).

Un troisième type de message spécifique concerne ce que l'homme de l'art appelle des messages d'information système de type SIB (« System Information Block »).

L'invention propose de définir un nouveau type de message d'information système SIB pour constituer des messages spécifiques à diffuser. Il est rappelé qu'à ce jour il existe déjà 18 types de messages SIB connus. Ces messages SIB sont notamment décrits dans la spécification technique TS 25.331 « Radio Resource control (RRC) protocol specification » du 3GPP.

Ce nouveau type de message SIB (n°19) est destiné à intégrer au moins une désignation de zone secondaire Ci. Un exemple de format d'un tel message SIB est donné ci-après.

| SIB | Type de zone | UE Etat/mode lorsque le block est valide | UE Etat/mode lorsque le bloc est lu | Information de programmation | Modification information système |
|---|---|---|---|---|---|
| N°19 | Cellule | Idle Mode | Idle Mode | Spécifiée par le IE | Indicateur de valeur |
| | | CELL_FACH | CELL_FACH | | |
| | | CELL_PCH | CELL_PCH | | |
| | | URA_PCH | URA_PCH | | |

| Elément d'information | Condition | Multi | Type et référence | Description sémantique |
|---|---|---|---|---|
| Zone de validité de service | Obligatoirement présent | | Description de la zone géographique | Coordonnées géographiques de la zone de validité de service |

L'acronyme IE désigne l'expression anglaise « Information Element » (élément d'information).

La description de la zone géographique peut par exemple utiliser l'une des méthodes définies dans la spécification technique TS 23.032 du 3GPP, ou une nouvelle méthode correspondant aux besoins de l'opérateur du réseau hybride et/ou aux spécificités dudit réseau hybride.

Par ailleurs, on entend ici par « zone de validité de service » l'ensemble d'au moins une zone secondaire (par exemple une cellule Ci) dans laquelle un service peut être mis en oeuvre. Le service consiste ici en la possibilité d'établir des communications prioritaires.

Chaque désignation de zone secondaire Ci est communiquée au gateway GW par le serveur d'informations SI, afin qu'il constitue un message SIB, du type de celui présenté ci-avant (type n°19), lequel définit alors un message spécifique. Ensuite, le gateway GW transmet le message spécifique (SIB) au satellite SC afin qu'il le diffuse dans sa zone de couverture ZP.

Lorsque le module de communication hybride MC d'un téléphone UEk reçoit un message spécifique du troisième type, il le transmet au dispositif de gestion D afin que son module de traitement MT analyse une partie au moins de son contenu.

Plus précisément, le module de traitement MT commence par analyser les données qui désignent chaque zone secondaire Ci. Comme dans le cas des premier et deuxième types de message spécifique, les données qui désignent une zone secondaire Ci peuvent être soit représentatives de l'identifiant de la zone secondaire Ci au sein du réseau hybride (ou des identifiants de la ou des cellules qui constituent cette zone secondaire), soit directement représentatives des positions géographiques qui définissent globalement sa zone de couverture (secondaire), ou mieux encore ses frontières.

Une fois que le module de traitement MT est en possession des données de positions géographiques de chaque zone secondaire désignée dans le message spécifique reçu, il détermine la position géographique du téléphone UEk dans lequel il est implanté. Comme dans le cas des premier et deuxième types de message spécifique, la détermination de la position géographique du téléphone UEk peut se faire au niveau dudit téléphone UEk s'il dispose d'un module de localisation ML délivrant des données de position (par exemple un module de radionavigation de type GNSS (ou RNSS)) ou un module de triangulation intercellulaire de type TOA), ou au niveau du réseau hybride s'il dispose d'un serveur de localisation chargé de déterminer les positions géographiques des téléphones UEk (par exemple au moyen de la technique EOTD).

Une fois que le module de traitement MT est en possession des données de positions géographiques de chaque zone secondaire désignée dans le message spécifique reçu et des données de position géographique du téléphone UEk dans lequel il est implanté (récupérées auprès du module de localisation ML ou du serveur de localisation), il les compare entre elles afin de déterminer si ledit téléphone UEk est situé ou non dans une zone secondaire désignée.

Puis, si le téléphone UEk est situé dans une zone secondaire désignée, le module de traitement MT l'autorise à demander l'établissement d'une communication d'urgence (ou prioritaire).

Dans le cas contraire, le module de traitement MT interdit l'établissement d'une communication d'urgence (ou prioritaire).

On entend ici par « communication d'urgence (ou prioritaire) » une communication utilisant des ressources satellitaires sur la voie dite montante (ou « return link »), c'est-à-dire du téléphone UEk vers le gateway GW, via le satellite SC. Comme le sait l'homme de l'art, les liaisons satellites mettent à la disposition des terminaux des clients du réseau hybride quelques ressources. Selon l'invention, en cas de besoin (c'est-à-dire en cas de diffusion de messages spécifiques) les ressources satellitaires sont strictement réservées aux téléphones UEk qui sont situés dans chaque zone secondaire prioritaire désignée dans l'un des messages spécifiques.

Ainsi, un utilisateur peut établir une communication d'urgence, par exemple avec un centre d'appels d'urgence, de manière à obtenir des informations complémentaires et/ou à demander de l'aide.

Les messages spécifiques étant diffusés dans toute la zone de couverture ZP d'un satellite SC, il est donc possible à chaque instant de modifier le choix des zones secondaires considérées comme prioritaires. Il suffit en effet de diffuser un nouveau message spécifique contenant une ou plusieurs nouvelle(s) désignation(s) de zone secondaire.

Il est important de noter que des messages de types différents peuvent coexister au sein d'un réseau hybride, sous réserve que les modules de traitement MT des dispositifs D implantés dans les téléphones UEk soient agencés de manière à assurer le traitement des informations prioritaires contenues dans ces différents types de messages spécifiques.

Il est également important de noter que les terminaux de communication qui sont situés dans une cellule prioritaire Ci, tout comme d'ailleurs ceux qui sont situés dans des cellules non prioritaires, conservent la possibilité d'établir des communications radio classiques avec le réseau hybride, via son réseau d'accès radio.

Le dispositif de gestion D selon l'invention, et notamment son module de traitement MT, peut être réalisé sous la forme de circuits électroniques, de modules logiciels (ou informatiques), ou d'une combinaison de circuits et de logiciels.

L'invention ne se limite pas aux modes de réalisation de dispositif de gestion et de terminal de communication hybride décrits ci-avant, seulement à titre d'exemple, mais elle englobe toutes les variantes que pourra envisager l'homme de l'art dans le cadre des revendications ci-après.

Dans ce qui précède on a décrit une application de l'invention à un réseau hybride. Mais, l'invention n'est pas limitée à ce type de réseau de communication. Elle concerne également les réseaux satellitaires et les réseaux cellulaires (ou mobiles).

Dans le cas d'un réseau satellitaire une zone primaire est une zone de couverture d'un satellite de communication dans laquelle sont diffusés par voie d'ondes les messages spécifiques, et une zone secondaire est une zone (ou étendue géographique) constituant une sous-partie d'une zone primaire. Dans le cas d'un réseau cellulaire, une zone primaire est une zone englobant plusieurs cellules radio dans lesquelles sont diffusés les messages spécifiques par des stations de base, et une zone secondaire est une zone qui peut être identique à une cellule donnée ou peut englober plusieurs cellules, au moins partiellement, ou bien peut ne constituer qu'une partie d'une grande cellule.

## Revendications

1. Dispositif (D) de gestion d'informations prioritaires pour un terminal de communication radio (UE1), d'un réseau de communication radio, comprenant un module de communication (MC) propre à communiquer avec ledit réseau, **caractérisé en ce qu'**il comprend des moyens de traitement (MT) agencés, en cas de réception par ledit module de communication (MC) d'un message diffusé par le réseau dans une zone dite « primaire » (ZP) et contenant au moins la désignation d'au moins une zone dite « secondaire » (C1) incluse dans la zone primaire (ZP), pour déterminer si ledit terminal (UE1) est situé dans ladite zone secondaire désignée (C1), de manière à autoriser ledit terminal à établir une communication prioritaire avec ledit réseau et/ou à afficher des informations prioritaires, éventuellement contenues dans ledit message reçu, si ce terminal se trouve situé dans ladite zone secondaire (C1).

2. Dispositif selon la revendication 1, **caractérisé en ce que** certains au moins desdits messages diffusés sont des messages d'alarme contenant au moins une désignation de zone secondaire (C1) et lesdites informations prioritaires à afficher.

3. Dispositif selon la revendication 1, **caractérisé en ce que** certains au moins desdits messages diffusés comportent au moins une désignation de zone secondaire (C1) et un message d'alarme contenant lesdites informations prioritaires à afficher.

4. Dispositif selon l'une des revendications 1 à 3, **caractérisé en ce qu'**en présence d'un réseau de type hybride ou satellitaire comprenant au moins un satellite de communication (SC) couvrant ladite zone primaire (ZP) incluant chaque zone secondaire désignée (C1), certains au moins desdits messages diffusés par ledit satellite de communication (SC) sont des messages d'information système de type SIB contenant au moins une désignation de zone secondaire (C1).

5. Dispositif selon la revendication 4, **caractérisé en ce que** lesdits messages d'information système de type SIB sont dédiés et comportent un champ destiné à la désignation d'au moins une zone secondaire (C1).

6. Dispositif selon l'une des revendications 1 à 5, **caractérisé en ce que** lesdits moyens de traitement (MT) sont agencés, lorsqu'ils ont déterminé que ledit terminal (UE1) est situé dans une zone secondaire désignée (C1), pour autoriser ledit module de communication (MC) à établir une communication d'urgence avec ledit réseau, au moyen de ressources dédiées.

7. Dispositif selon l'une des revendications 1 à 6, **caractérisé en ce que** lesdits moyens de traitement (MT) sont agencés, lorsqu'ils ont déterminé que ledit terminal (UE1) n'est pas situé dans une zone secondaire désignée (UE1), pour interdire ledit module de communication (MC) d'établir une communication d'urgence avec ledit réseau, au moyen de ressources dédiées.

8. Dispositif selon l'une des revendications 1 à 7, **caractérisé en ce que** chaque désignation est représentative de positions géographiques définissant une enveloppe de la zone secondaire désignée (C1), et **en ce que** lesdits moyens de traitement (MT) sont agencés pour déterminer si la position dudit terminal (UE1) est comprise dans ladite enveloppe.

9. Dispositif selon l'une des revendications 1 à 7, **caractérisé en ce que** chaque désignation est représentative de l'identifiant de la zone secondaire désignée (C1), et **en ce que** lesdits moyens de traitement (MT) sont agencés pour déterminer les positions géographiques qui définissent une enveloppe associée à un identifiant de zone secondaire désignée, puis si la position dudit terminal (UE1) est comprise dans ladite enveloppe.

10. Dispositif selon l'une des revendications 1 à 7, **caractérisé en ce qu'**en présence d'un réseau hybride ou cellulaire, chaque désignation est représentative de chaque identifiant de cellule constituant la zone secondaire désignée (C1), et **en ce que** lesdits moyens de traitement (MT) sont agencés pour déterminer les positions géographiques qui définissent une enveloppe de couverture associée à chaque identifiant de cellule désignée, puis si la position dudit terminal (UE1) est comprise dans ladite enveloppe.

11. Dispositif selon l'une des revendications 1 à 10, **caractérisé en ce que** lesdits moyens de traitement (MT) sont agencés pour déterminer si ledit terminal (UE1) est situé dans une zone secondaire désignée (C1) à partir de données représentatives de sa position géographique, fournies par des moyens de localisation (ML).

12. Terminal de communication radio (UEk), pour un réseau de communication radio, comprenant un module de communication (MC) propre à communiquer avec ledit réseau, **caractérisé en ce qu'**il comprend un dispositif de gestion (D) selon l'une des revendications précédentes.

13. Terminal selon la revendication 12, **caractérisé en ce qu'**il comprend des moyens de localisation (ML) propres à délivrer lesdites données représentatives de sa position géographique.

14. Terminal selon la revendication 13, **caractérisé en ce que** lesdits moyens de localisation (ML) sont choisis dans un groupe comprenant au moins un module de radionavigation et un module de triangulation intercellulaire.

15. Utilisation des dispositif de gestion (D) et terminal de communication radio (UEk) selon l'une des revendications précédentes dans les réseaux de communication radio choisis dans un groupe comprenant les réseaux hybrides, les réseaux satellitaires et les réseaux cellulaires.
